# EUROPÄISCHE PATENTSCHRIFT

(11) **EP 1 756 008 B1**
(45) Veröffentlichungstag und Bekanntmachung des Hinweises auf die Patenterteilung: **05.01.2011**
(21) Anmeldenummer: 05740658.9
(22) Anmeldetag: 23.05.2005
(51) Int. Cl.: C01G 49/14, C09C 1/24, C05D 9/02, C04B 22/14

(54) **RIESELFÄHIGES, AGGLOMERIERTES EISENSULFAT MIT TRÄGERMATERIAL, VERFAHREN ZU DESSEN HERSTELLUNG UND DESSEN VERWENDUNG**
FLOWABLE, AGGLOMERATE IRON SULFATE COMPRISING A CARRIER MATERIAL, METHOD FOR PRODUCING THE SAME AND USE THEREOF
SULFATE DE FER AGGLOMERE FLUIDE COMPRENANT UNE MATIERE DE SUPPORT, PROCEDE POUR LE PRODUIRE ET SON UTILISATION

(30) Priorität: 28.05.2004 DE 102004026695
(43) Veröffentlichungstag der Anmeldung: 28.02.2007
(73) Patentinhaber: Sachtleben Chemie GmbH, 47198 Duisburg (DE)
(72) Erfinder: AMIRZADEH-ASL, Djamschid, 47445 Moers (DE)
(74) Vertreter: Uppena, Franz
(86) Internationale Anmeldenummer: PCT/EP2005/005562
(87) Internationale Veröffentlichungsnummer: WO 2005/115920

(56) Entgegenhaltungen:
- EP-A- 1 314 706
- WO-A-84/01942

## Beschreibung

Die Erfindung betrifft rieselfähiges, agglomeriertes Eisensulfat mit Trägermaterial, ein Verfahren zu dessen Herstellung und dessen Verwendung, wobei unter Eisensulfat Eisen(II)sulfat oder Eisen(III)sulfat oder eine Mischung davon verstanden wird.

Eisen(II)sulfat findet Verwendung z.B. in der Zementindustrie zur Reduzierung von Cr(VI) zu Cr(III). Eisensulfat allgemein findet Verwendung in der Landwirtschaft (Düngemittel, Moosvernichtung), in der Medizin, der Pharmazie und in der Abwasserbehandlung. Dabei ist es oftmals notwendig, dass das Eisensulfat agglomeriert vorliegt, gut rieselfähig und pneumatisch förderbar ist.

In der EP 1 314 706 A2 wird ein aus Grünsalz bestehendes Eisen(II)sulfat beschrieben, dem ein inertes Trägermaterial (z.B. Silicagel) zugefügt wurde, wobei die erhaltene Mischung eine Körnung mit einem Siebrückstand auf einem 0,2 mm Sieb von kleiner oder gleich 30 % aufweist. Bevorzugt wird das inerte Trägermaterial in einer Menge von 5 bis 15 Gew.-% relativ zur Grünsalzmenge zugegeben, besonders bevorzugt ist eine Menge von ca. 10 Gew.-%.

Von Nachteil dieser Eisen(II)sulfat-Mischung ist, dass sich dieses Material oft nur schwierig pneumatisch fördern lässt. Weiterhin ist die Rieselfähigkeit des Materials nicht gewährleistet. Außerdem kann das Material bei längerer Lagerung Feuchtigkeit aufnehmen, wodurch sich Klumpen bilden. Diese können zu einer Verstopfung der Förderanlage bzw. Dosieranlage führen. Darüber hinaus führt eine Verklumpung zur einen Reduzierung der Aktivität des Eisen(II)sulfates. Auch die Lagerstabilität ist dadurch nicht ausreichend gewährleistet. Ein weiterer Nachteil der bekannten Mischung aus Eisen(II)sulfat und inertem Trägermaterial ist der in der Regel zu hohe Gehalt an Trägermaterialien. Durch den zu hohen Gehalt an Trägermaterialien ist eine höhere Dosierung der Eisens(II)ulfat-Mischung notwendig, um die gewünschte Menge des Wirkstoffes Eisensulfat in das jeweilige Anwendungssystem zu bringen. Dadurch werden zu viele unerwünschte Fremdstoffe in das Anwendungssystem eingeschleppt, wodurch die Endproduktqualität nachteilig beeinflusst wird.

Aufgabe der Erfindung ist es, die Nachteile des Standes der Technik zu überwinden und insbesondere ein rieselfähiges, agglomeriertes Eisensulfat zu schaffen, das sich durch einen möglichst niedrigen Gehalt an Trägermaterialien auszeichnet.

Gelöst wird die Aufgabe durch ein Eisensulfat, welches ein inertes Trägermaterial in einer Menge von 0,5 bis 4,5 Gew.-%, bezogen auf Menge des eingesetzten Eisensulfates enthält, wobei das Trägermaterial enthaltende Eisensulfat eine Körnung mit einem Siebrückstand auf einem 0,2 mm Sieb von größer 35 Gew.-% und mit einem Siebrückstand auf einem 10 mm Sieb von kleiner 1 Gew.-% aufweist. Das Eisensulfat kann als Eisen(II)sulfat oder Eisen(III)sulfat oder als Mischung davon vorliegen.

Es wurde gefunden, dass ein Eisensulfat mit diesen Eigenschaften trotz des im Vergleich zum Stand der Technik geringeren Gehaltes an inertem Trägermaterial die gewünschten Agglomerate aufweist, rieselfähig ist und durch den verringerten Feinanteil nicht die oben genannten Nachteile aufweist.

Das eingesetzte Eisensulfat kann wasserfrei sein oder Hydratwasser (z.B. 1 bis 7 mol Hydratwasser pro mol Eisensulfat) enthalten. In einer bevorzugten Ausführungsform der Erfindung wird Eisen(II)sulfat in Form von Grünsalz oder Filtersalz aus der Titandioxidherstellung eingesetzt.

Je nach Reinheitsgrad kann das eingesetzte Eisensulfat noch mehr oder weniger Verunreinigungen enthalten, z.B. Mg-, Al-, Si-, Ca- oder Ti-Verbindungen, die z.B. als Oxid oder Sulfat vorliegen können.

Das eingesetzte Eisensulfat kann neben Hydratwasser noch physikalisch gebundenes Wasser (Feuchte) enthalten, z.B. in einem Bereich von 1 bis 45 Gew.-%. Bevorzugt weist das feuchte Eisensulfat einen Wassergehalt von 5 bis 40 Gew.-%, besonders bevorzugt von 10 bis 35 Gew.-% auf. Es kann auch trockenes Eisensulfat eingesetzt werden.

Das inerte Trägermaterial kann als Trocken- und Trennmittel wirken. Als inertes Trägermaterial kann z.B. eingesetzt werden: SiO₂ (z.B. in Form von Kieselsäure oder Silicagel), Natriumsilikat, Calciumsilikat, Magnesiumsilikat, Natriumaluminiumsilikat, Kaliumaluminiumsilikat, (aktiviertes) Aluminiumoxid, Phosphorpentoxid, CaSO₄ (Anhydrit), Zeolith oder Zement. Bevorzugt sind synthetisch hergestelltes Silicagel oder synthetisch (z.B. pyrogen) hergestellte Kieselsäure. Das eingesetzte Trägermaterial hat bevorzugt eine mittlere Korngröße d₅₀ von 10 nm bis 1 mm, besonders bevorzugt von 100 nm bis 300 µm und ganz besonders bevorzugt von 1 µm bis 200 µm.

Eine bevorzugte minimale Zugabemenge des inerten Trägermaterials ist 1 Gew.- %. Eine bevorzugte maximale Zugabemenge des inerten Trägermaterials ist 4 Gew.-%, besonders bevorzugt 3,5 Gew.-% (jeweils bezogen auf die Menge des eingesetzten Eisensulfates).

Bevorzugt weist das erfindungsgemäße Eisensulfat eine untere Korngröße auf, bei der der Siebrückstand auf einem 0,2 mm Sieb größer als 40 Gew.-% ist. Bei einer bevorzugten oberen Korngröße beträgt der Siebrückstand auf einem 5 mm Sieb weniger als 2 Gew.-%, bei einer besonders bevorzugten oberen Korngröße beträgt der Siebrückstand auf einem 2 mm Sieb weniger als 2 Gew.-%.

Das erfindungsgemäße, ein inertes Trägermaterial enthaltende Eisensulfat kann wie folgt hergestellt werden: Trockenes oder feuchtes Eisensulfat (Wassergehalt z.B. 1 bis 45 Gew.-%, gerechnet ohne Hydratwasser) wird mit 0,5 bis 4,5 Gew.-% (bezogen auf die Menge des eingesetzten Eisensulfates) inertem Trägermaterial gemischt. Je feiner das inerte Trägermaterial vorliegt, desto geringer kann die Zugabemenge des Trägermaterials gewählt werden. Die Mischung kann in üblichen Mischaggregaten (z.B. Trommelmischer, Pflugscharmischer, Schaufelmischer, Bandwendelmischer, Paddelmischer, Schneckenmischer) erfolgen.

Das Gemisch kann auch pelletiert werden. Hierbei wird in einer Pelletiertrommel oder in einem Pelletierteller durch die Zugebe des Trägermaterials die geeignete Körnung eingestellt. Pelletiertrommeln sind leicht geneigte Drehrohre, mit oder ohne Einbauten, in denen durch Drehbewegung ein kugeliges Granulat unterschiedlichen Durchmessers entsteht. Beim Pelletierteller wird das Pelletiergut auf den mittleren Teil eines geneigten, rotierenden Tellers aufgegeben und durch die rollende Bewegung in einem Arbeitsgang zu den gewünschten Agglomerat geformt.

Um zu den gewünschten Korngrößen zu gelangen, können gegebenenfalls von dem erhaltenen Produkt nicht gewünschte Korngrößen abgetrennt werden. Z. B. kann das agglomerierte, ein inertes Trägermaterial enthaltende Eisensulfat gesiebt werden, um Material nicht gewünschter Korngröße abzutrennen. In den meisten Fällen kann allerdings durch Wahl der Verfahrensparameter (Feuchtegehalt des eingesetzten Eisensulfates, Zugabemenge des inerten Trägers, Einstellung des Mischaggregates) direkt ein Produkt mit der gewünschten Korngröße erhalten werden.

Die rieselfähige, agglomerierte Mischung aus Eisensulfat und inertem Trägermaterial kann einer thermischen Behandlung unterzogen werden. Dies kann bevorzugt bei einer Temperatur von 40 bis 150 °C durchgeführt werden. Die Dauer der thermischen Behandlung beträgt bevorzugt 5 Minuten bis 2 Tage. Auf diese Weise lässt sich aus dem erfindungsgemäßen Eisensulfat physikalisch gebundenes Wasser, bzw. Hydratwasser entfernen oder teilweise entfernen.

Erfindungsgemäßes Eisen(II)sulfat findet Verwendung in der Landwirtschaft als Düngemittelzusatz, als Moosvernichter, Pflanzenschutzmittel und Rasendünger, in der Abwasserbehandlung (Fällungs- und Flockungsmittel), in der Herstellung von Eisenoxid-Produkten, insbesondere Eisenoxidpigmenten, und als Zusatz zum Tierfutter.

Als Zusatzmittel in Zement, Mörtel und Beton kann Eisen(II)sulfat das im Zement in Spuren vorliegende lösliche Chrom(VI) in unlösliches Chrom(III) reduzieren. Die bevorzugte Zugabemenge des agglomerierten, einen inerten Träger enthaltenden Eisen(II)sulfates liegt bei 0,01 bis 4 Gew.-%, bezogen auf die Zement-, Mörtel- oder Betonmenge.

Erfindungsgemäßes Eisen(III)sulfat findet Verwendung bei der Bindung von Schwefelwasserstoff, bei der Phosphatfällung und allgemein bei der mechanischen Abwasserreinigung (Fällungs- und Flockungsmittel) und in der Herstellung von Eisenoxid-Produkten, insbesondere Eisenoxidpigmenten. Weitere Verwendungsmöglichkeiten sind der Zusatz zum Tierfutter und der Einsatz als Moosvernichter und Rasendünger.

Der Gegenstand der Erfindung wird anhand des folgenden Beispiels näher erläutert:

### Beispiel 1: Herstellung von rieselfähigem, agglomeriertem Eisen(II)sulfat mit Silicagel

In einem Chargenmischer wurden 10 kg Eisen(II)sulfat-Heptahydrat mit einer Feuchte von 30 Gew.-% vorgelegt und nach Zugabe von 0,35 kg Silicagel (Siebanalyse 99 % < 100 µm) 5 Minuten gemischt. Die Rieselfähigkeit stellte sich bereits nach 2 Minuten ein. Das erhaltene Produkt hatte folgende Siebanalyse:
> 2 mm 1,1 Gew.-%
> 1 mm 11 Gew.-%
> 0.5 mm 45 Gew.-%
> 0,2 mm 75 Gew.-%.

Das so erhaltene agglomerierte Eisen(II)sulfat zeigte eine hervorragende Rieselfähigkeit und ließ sich sehr gut pneumatisch fördern.

## Patentansprüche

1. Eisensulfat, **dadurch gekennzeichnet, dass** es ein inertes Trägermaterial in einer Menge von 0,5 bis 4,5 Gew.-%, bezogen auf die Menge eingesetztes Eisensulfat, enthält, wobei das das inerte Trägermaterial enthaltende Eisensulfat eine Körnung mit einem Siebrückstand auf einem 0,2 mm Sieb von größer 35 Gew.-% und mit einem Siebrückstand auf einem 10 mm Sieb von kleiner 1 Gew.-% aufweist.

2. Eisensulfat nach Anspruch 1, **dadurch gekennzeichnet, dass** das Eisensulfat als Eisen(II)sulfat vorliegt.

3. Eisensulfat nach Anspruch 1, **dadurch gekennzeichnet, dass** das Eisensulfat als Eisen(III)sulfat vorliegt.

4. Eisensulfat nach Anspruch 1, **dadurch gekennzeichnet, dass** das Eisensulfat als Mischung von Eisen(II)sulfat und Eisen(III)sulfat vorliegt.

5. Eisensulfat nach Anspruch 2, **dadurch gekennzeichnet, dass** als Eisen(II)sulfat Grünsalz oder Filtersalz eingesetzt wird.

6. Eisensulfat nach einem der Ansprüche 1 bis 5, **dadurch gekennzeichnet, dass** das eingesetzte Eisensulfat Hydratwasser enthält.

7. Eisensulfat nach einem der Ansprüche 1 bis 6, **dadurch gekennzeichnet, dass** das eingesetzte Eisensulfat neben Hydratwasser noch physikalisch gebundenes Wasser (Feuchte) enthält.

8. Eisensulfat nach Anspruch 7, **dadurch gekennzeichnet, dass** das feuchte Eisensulfat einen Wassergehalt von 1 bis 45 Gew.-% aufweist.

9. Eisensulfat nach Anspruch 7, **dadurch gekennzeichnet, dass** das feuchte Eisensulfat einen Wassergehalt von 5 bis 40 Gew.-% aufweist.

10. Eisensulfat nach einem der Ansprüche 1 bis 9, **dadurch gekennzeichnet, dass** als inertes Trägermaterial eingesetzt wird einer oder mehrere der Stoffe: SiO₂, Natriumsilikat, Calciumsilikat, Magnesiumsilikat, Natriumaluminiumsilikat, Kaliumaluminiumsilikat, (aktiviertes) Aluminiumoxid, Phosphorpentoxid, CaSO₄ (Anhydrit), Zeolith oder Zement.

11. Eisensulfat nach einem der Ansprüche 1 bis 10, **dadurch gekennzeichnet, dass** als inertes Trägermaterial synthetisch hergestelltes Silicagel oder synthetisch hergestellte Kieselsäure eingesetzt wird.

12. Eisensulfat nach einem der Ansprüche 1 bis 11, **dadurch gekennzeichnet, dass** die minimale Zugabemenge des inerten Trägermaterials 1 Gew.-% beträgt, bezogen auf die Menge des eingesetzten Eisensulfates.

13. Eisensulfat nach einem der Ansprüche 1 bis 12, **dadurch gekennzeichnet, dass** die maximale Zugabemenge des inerten Trägermaterials 4 Gew.-% beträgt, bezogen auf die Menge des eingesetzten Eisensulfates.

14. Eisensulfat nach Anspruch 13, **dadurch gekennzeichnet, dass** die maximale Zugabemenge des inerten Trägermaterials 3,5 Gew.-% beträgt.

15. Verfahren zur Herstellung von rieselfähigem, agglomeriertem, ein inertes Trägermaterial enthaltendem Eisensulfat, **dadurch gekennzeichnet, dass** trockenes oder feuchtes Eisensulfat mit 0,5 bis 4,5 Gew.-% (bezogen auf die Menge des eingesetzten Eisensulfates) inertem Trägermaterial gemischt wird und das erhaltene Produkt eine Körnung mit einem Siebrückstand auf einem 0,2 mm Sieb von größer 35 Gew.-% und mit einem Siebrückstand auf einem 10 mm Sieb von kleiner 1 Gew.-% aufweist, wobei die Körnung des Produktes gegebenenfalls durch Abtrennen nicht gewünschter Korngrößen eingestellt wird.

16. Verfahren nach Anspruch 15, **dadurch gekennzeichnet, dass** die Mischung in einem Trommelmischer, Pflugscharmischer, Schaufelmischer, Bandwendelmischer, Paddelmischer, Schneckenmischer, einer Pelletiertrommel oder einem Pelletierteller erfolgt.

17. Verfahren nach Anspruch 15 oder 16, **dadurch gekennzeichnet, dass** die rieselfähige, agglomerierte Mischung aus Eisensulfat und inertem Trägermaterial einer thermischen Behandlung unterzogen wird.

18. Verfahren nach Anspruch 17, **dadurch gekennzeichnet, dass** dies thermische Behandlung bei einer Temperatur von 40 bis 150 °C durchgeführt wird.

19. Verfahren nach Anspruch 17 oder 18, **dadurch gekennzeichnet, dass** die thermische Behandlung über eine Dauer von 5 Minuten bis 2 Tage durchgeführt wird.

20. Verwendung von Eisensulfat entsprechend einem der Ansprüche 1 bis 14 in der Landwirtschaft und im Garterbereich als Düngemittelzusatz, als Moosvernichter, Pflanzenschutzmittel und Rasendünger, in der Abwasserbehandlung als Fällungs- und Flockungsmittel, in der Herstellung von Eisenoxid-Produkten, insbesondere Eisenoxidpigmenten, als Zusatz zum Tierfutter und als Zusatzmittel in Zement, Mörtel und Beton.

## Claims

1. Iron sulphate, **characterised in that** it contains an inert carrier material in a quantity of 0.5 to 4.5 % by weight, relative to the quantity of iron sulphate used, wherein the iron sulphate containing the inert carrier material has a grain size with a sieve residue on a 0.2 mm sieve of more than 35 % by weight and with a sieve residue on a 10 mm sieve of less than 1 % by weight.

2. Iron sulphate according to claim 1, **characterised in that** the iron sulphate is present as iron(II) sulphate.

3. Iron sulphate according to claim 1, **characterised in that** the iron sulphate is present as iron(III) sulphate.

4. Iron sulphate according to claim 1, **characterised in that** the iron sulphate is present as a mixture of iron(II) sulphate and iron(III) sulphate.

5. Iron sulphate according to claim 2, **characterised in that** green salt or filter salt is used as the iron(II) sulphate.

6. Iron sulphate according to one of claims 1 to 5, **characterised in that** the iron sulphate used contains hydration water.

7. Iron sulphate according to one of claims 1 to 6, **characterised in that** in addition to hydration water the iron sulphate used further contains physically bound water (moisture).

8. Iron sulphate according to claim 7, **characterised in that** the moist iron sulphate has a water content of 1 to 45 % by weight.

9. Iron sulphate according to claim 7, **characterised in that** the moist iron sulphate has a water content of 5 to 40 % by weight.

10. Iron sulphate according to one of claims 1 to 9, **characterised in that** one or more of the substances: SiO₂, sodium silicate, calcium silicate, magnesium silicate, sodium aluminium silicate, potassium aluminium silicate, (activated) aluminium oxide, phosphorus pentoxide, CaSO₄ (anhydrite), zeolite or cement is used as the inert carrier material.

11. Iron sulphate according to one of claims 1 to 10, **characterised in that** synthetically produced silica gel or synthetically produced silicic acid is used as the inert carrier material.

12. Iron sulphate according to one of claims 1 to 11, **characterised in that** the minimum quantity of inert carrier material added amounts to 1 % by weight, relative to the quantity of iron sulphate used.

13. Iron sulphate according to one of claims 1 to 12, **characterised in that** the maximum quantity of inert carrier material added amounts to 4 % by weight, relative to the quantity of iron sulphate used.

14. Iron sulphate according to claim 13, **characterised in that** the maximum quantity of inert carrier material added amounts to 3.5 % by weight.

15. Method for producing free-flowing, agglomerated iron sulphate containing an inert carrier material, **characterised in that** dry or moist iron sulphate is mixed with 0.5 to 4.5 % by weight inert carrier material (relative to the quantity of iron sulphate used), and the product obtained has a grain size with a sieve residue on a 0.2 mm sieve of more than 35 % by weight and with a sieve residue on a 10 mm sieve of less than 1 % by weight, wherein the grain size of the product is adjusted, if applicable, by separation of grain sizes that are not desired.

16. Method according to claim 15, **characterised in that** the mixing is effected in a drum mixer, ploughshare mixer, blade mixer, band-spiral mixer, paddle mixer, screw mixer, a drum pelletizer or a disc pelletizer.

17. Method according to claim 15 or 16, **characterised in that** the free-flowing, agglomerated mixture of iron sulphate and inert carrier material is subjected to heat-treatment.

18. Method according to claim 17, **characterised in that** the heat-treatment is carried out at a temperature of 40 to 150°C.

19. Method according to claim 17 or 18, **characterised in that** the heat-treatment is carried out for a period of 5 minutes to 2 days.

20. Use of iron sulphate in accordance with one of claims 1 to 14 in agriculture and in the garden area as a fertilizer additive, as a moss-killer, pesticide and lawn fertilizer, in sewage-treatment as a precipitant and flocculant, in the production of iron-oxide products, in particular iron-oxide pigments, as an additive for animal food and as an additive agent in cement, mortar and concrete.

## Revendications

1. Sulfate de fer, **caractérisé en ce qu'**il contient un matériau support inerte, en une quantité représentant de 0,5 à 4,5 % du poids de sulfate de fer utilisé, lequel sulfate de fer contenant un matériau support inerte présente une granulométrie telle qu'il en reste plus de 35 % en poids sur un tamis de 0,2 mm et moins de 1 % en poids sur un tamis de 10 mm.

2. Sulfate de fer conforme à la revendication 1, **caractérisé en ce que** le sulfate de fer se présente à l'état de sulfate de fer-(II).

3. Sulfate de fer conforme à la revendication 1, **caractérisé en ce que** le sulfate de fer se présente à l'état de sulfate de fer-(III).

4. Sulfate de fer conforme à la revendication 1, **caractérisé en ce que** le sulfate de fer se présente à l'état de mélange de sulfate de fer-(II) et de sulfate de fer-(III).

5. Sulfate de fer conforme à la revendication 2, **caractérisé en ce qu'**on utilise, en tant que sulfate de fer-(II), du sel vert ou du sel filtrant.

6. Sulfate de fer conforme à l'une des revendications 1 à 5, **caractérisé en ce que** le sulfate de fer utilisé contient de l'eau d'hydratation.

7. Sulfate de fer conforme à l'une des revendications 1 à 6, **caractérisé en ce que** le sulfate de fer utilisé contient encore, en plus de l'eau d'hydratation, de l'eau physiquement liée (humidité).

8. Sulfate de fer conforme à la revendication 7, **caractérisé en ce que** le sulfate de fer humide contient de 1 à 45 % en poids d'eau.

9. Sulfate de fer conforme à la revendication 7, **caractérisé en ce que** le sulfate de fer humide contient de 5 à 40 % en poids d'eau.

10. Sulfate de fer conforme à l'une des revendications 1 à 9, **caractérisé en ce que** l'on utilise, en tant que matériau support inerte, l'une ou plusieurs des matières suivantes : silice, silicate de sodium, silicate de calcium, silicate de magnésium, silicate d'aluminium et de sodium, silicate d'aluminium et de potassium, oxyde d'aluminium (activé), pentoxyde de phosphore, sulfate de calcium (anhydrite), zéolithe et ciment.

11. Sulfate de fer conforme à l'une des revendications 1 à 10, **caractérisé en ce que** l'on utilise, en tant que matériau support inerte, un gel de silice préparé par synthèse ou un acide silicique préparé par synthèse.

12. Sulfate de fer conforme à l'une des revendications 1 à 11, **caractérisé en ce que** la quantité minimale ajoutée de matériau support inerte représente 1 % du poids de sulfate de fer utilisé.

13. Sulfate de fer conforme à l'une des revendications 1 à 12, **caractérisé en ce que** la quantité maximale ajoutée de matériau support inerte représente 4 % du poids de sulfate de fer utilisé.

14. Sulfate de fer conforme à la revendication 13, **caractérisé en ce que** la proportion maximale de matériau support inerte ajouté vaut 3,5 % en poids.

15. Procédé de préparation d'un sulfate de fer, aggloméré mais capable de s'écouler, contenant un matériau support inerte, **caractérisé en ce que** l'on mélange du sulfate de fer, sec ou humide, avec un matériau support inerte utilisé en une proportion de 0,5 à 4,5 %, en poids rapporté au poids de sulfate de fer utilisé, et **en ce que** le produit obtenu présente une granulométrie telle qu'il en reste plus de 35 % en poids sur un tamis de 0,2 mm et moins de 1 % en poids sur un tamis de 10 mm, étant entendu que, le cas échéant, l'on ajuste la granulométrie du produit en en séparant les grains de taille indésirable.

16. Procédé conforme à la revendication 15, **caractérisé en ce que** l'on effectue l'opération de mélange dans un mélangeur à tambour, un mélangeur à soc, un mélangeur à pales, un mélangeur à ruban hélicoïdal, un mélangeur à pagaie, un mélangeur à vis, un tambour de granulation ou une assiette de granulation.

17. Procédé conforme à la revendication 15 ou 16, **caractérisé en ce que** le mélange, aggloméré mais capable de s'écouler, de sulfate de fer et de matériau support inerte est soumis à un traitement thermique.

18. Procédé conforme à la revendication 17, **caractérisé en ce que** le traitement thermique est effectué à une température de 40 à 150 °C.

19. Procédé conforme à la revendication 17 ou 18, **caractérisé en ce que** l'on fait durer le traitement thermique de 5 minutes à 2 jours.

20. Utilisation d'un sulfate de fer conforme à l'une des revendications 1 à 14, en agriculture ou en horticulture en tant que complément d'engrais ou en tant qu'agent destructeur de mousses, agent protecteur de plantes ou engrais pour pelouses, dans le traitement d'eaux résiduaires en tant qu'agent de précipitation ou de floculation, dans la préparation de produits à base d'oxyde de fer, en particulier de pigments à base d'oxyde de fer, en tant qu'adjuvant d'aliments pour animaux, ou en tant qu'adjuvant dans un ciment, un mortier ou un béton.
